# EUROPÄISCHE PATENTANMELDUNG

(11) **EP 0 862 305 A2**
(43) Veröffentlichungstag der Anmeldung: **02.09.1998**
(21) Anmeldenummer: 98102880.6
(22) Anmeldetag: 19.02.1998
(51) Int. Cl.: H04M 1/00, H04Q 1/453

(54) **Vorrichtung zur kontaktlosen Übertragung von DTMF-Signalen**

(30) Priorität: 20.02.1997 CZ 52697
(71) Anmelder: Stovicek, Pavel, 301 42 Plzen (CZ); Zizka, Jaroslav, 330 11 Tremosna (CZ)
(72) Erfinder: Stovicek, Pavel, 301 42 Plzen (CZ); Zizka, Jaroslav, 330 11 Tremosna (CZ)
(74) Vertreter: Jeck, Anton, Dipl.-Ing.

(57) **Zusammenfassung**

Die Erfindung betrifft eine Vorrichtung zur kontaklosen Übertragung von DTMF-Signalen mit einer Standardtastatur (1) zur Wahl von DTMF sowie einem eingebauten und vorzugsweise dynamischen Lautsprecher (2). Im Empfangsschaltkreis der DTMF-Wahl der Vorrichtung ist ein Dekoder von DTMF-Signal (7) geschaltet ist. Die Vorrichtung weist am Eingang des Empfangsschaltkreises einen Kondensator (6) sowie einen Widerstand (10) auf. Am Eingang des Empfangsschaltkreises der DTMF-Wahl ist ein auf Infrarotstrahlen ansprechender Transistor (5) angeschlossen, der mit seinem einen Ende mit der gemeinsamen Erde (4) der Empfangsschaltung verbunden ist, während sein anderes Ende mit dem Eingang der Empfangsschaltung und mit dem Widerstand (10) verbunden ist, dessen zweites Ende an die Versorgungsspannung (9) angeschlossen ist, wobei die tragbare Standardtastatur (1) der DTMF-Wahl mit dem Schaltkreis des eingebauten dynamischen Lautsprechers (2) über eine Infrarotstrahlen aussendende Diode (3) in Serie geschaltet ist.

## Beschreibung

Die Erfindung betrifft eine Vorrichtung nach dem Oberbegriff des Anspruches 1.

Unter DTMF ist ein Signalübertragungsverfahren zu verstehen, das Doppelton-Mehrfrequenz-Signale verwendet. DTMF-Wähler werden ausschließlich zur Bedienung von Telekommunikations- oder Rundfunkeinrichtungen verwendet. Der Sender des DTMF-Wählers ist entweder im Telefonapparat, in dem nach Betätigung der Tastatur die entsprechende Frequenz moduliert wird, oder in einer Übertragungseinrichtung (Steuerung) angeordnet. Die modulierte Frequenz wird hierbei in die Telefonzentrale übertragen, wo sie ausgewertet wird. Diese Mehr-Frequenz-Wahl wird in Telekommunikationseinrichtungen mit digitalen Zentralen genutzt. In anderen Fällen kann der Telefonapparat oder der Radioempfänger mit übertragbarer Tastatur der DTMF-Signale, die in der Nähe des Mikrofons des Telefon- oder Radiohörers positioniert wird, verwendet werden. Nach Betätigung der Tastatur der mobilen Bedienung wird eine vom eingebauten Lautsprecher modulierte Frequenz gesendet. Diese Frequenz wird in bekannter Übertragungsart akustisch über das Mikrofon der Telefon- oder Radioeinrichtung an die Empfängerseite der Telefon- oder Rundfunkeinrichtung übertragen. Die empfangenen Signale werden sodann im DTMF-Empfänger ausgewertet und weiter verarbeitet.

Die Übertragung der DTMF-Wahlsignale ist daher aus der direkten Durchschaltung in Telefon- oder Radioeinrichtungen bekannt, nämlich DTMF-Sender / DTMF-Empfänger oder transportable Tastatur der DTMF-Wahl / DTMF-Signale, die aus dem Lautsprecher der transportablen Tastatur akustisch über das Mikrofon der ersten Einrichtung zur weiteren Verarbeitung auf der anderen Seite des Übertragungswegs mit einer Einrichtung mit einem Empfänger von DTMF-Signalen übertragen. Als nachteilig wird bei bekannten Einrichtungen die akustische Übertragung empfunden, die nicht mittels starrer, fester Schaltungen sowie in geräuschvoller Umgebung durchgeführt werden kann.

Ausgehend von dem obigen Stand der Technik liegt der Erfindung die Aufgabe zugrunde, hier Abhilfe zu schaffen.

Die gestellte Aufgabe wird erfindungsgemäß durch die Merkmale des Anspruches 1 gelöst.

Man erkennt, daß die Erfindung jedenfalls dann verwirklicht ist, wenn der Transistor am Eingang der Empfangsschaltung der DTMF-Wahl angeschlossen ist, wobei sein erstes Ende an die gemeinsame Erde der Empfangschaltung der DTMF angeschlossen ist, während sein zweites Ende an die Versorgungsspannung angeschlossen ist. Die transportable Standardtastatur der DTMF-Wahl ist im Schaltkreis des eingebauten dynamischen Lautsprechers über eine Sende-Diode (Infra-LED) in Serie geschaltet.

Ein wichtiger Vorteil der vorgeschlagenen Maßnahme besteht darin, daß die Übertragung von Informationen die Verwendung von Werkstoffen, die für Infrarot-Strahlen durchlässig sind, nicht gestört wird. Die Übertragung der Informationen in geräuschvoller Umgebung erfolgt ebenfalls problemlos. Ein weiterer Vorteil der Erfindung besteht darin, daß die transportable Tastatur der DTMF-Wahl auch in anderen Bereichen, z.B. zur Steuerung und Einstellung von gewerblichen Sicherheitseinrichtungen, möglich ist.

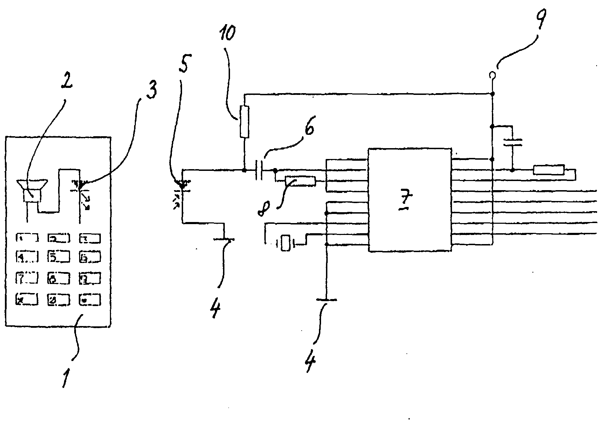

Ein Ausführungsbeispiel der Erfindung ist in der Zeichnung schematisch dargestellt.

Bei der Einstellung einer elektrischen Vorrichtung wurde eine Einrichtung zur kontaktlosen Übertragung von DTMF-Signalen verwendet. Dabei ist eine herkömmliche transportable Tastatur 1 für DTMF-Wahl mit eingebautem dynamischen Lautsprecher 2, der mit einer Infrarotstrahlen aussendenden Diode 3 in Serie geschaltet ist, verwendet.

Im Empfangsschaltkreis der DTMF-Wahl liegt ein Dekoder 7, Typ MT 8870, und im Eingangsschaltkreis liegen ein Kondensator 6 mit 100 nF sowie ein Widerstand 8 mit 220 kΩ. Ein Ende des Empfangsschaltkreises ist mit der gemeinsamen Erde 4 verbunden. Direkt am Eingang der Empfangsschaltung der DTMF-Wahl sind ein auf Infrarotstrahlen ansprechender Transistor 5, Typ IRE 5, und ein Widerstand 10 mit 5,6 kΩ angeschlossen, dessen anderes Ende an eine Versorgungsspannung 9 angeschlossen ist. Das andere Ende des Infrarottransistors 5 ist an die gemeinsame Erde 4 angeschlossen. Die Einrichtung funktioniert wie folgt: mit Hilfe einer üblichen, tragbaren und angepaßten Tastatur 1 wird eine elektrische Vorrichtung bedient. Darunter sind die Einstellungen der elektrischen Vorrichtung auf ihr Arbeitsregime, Zeit, Art der Funktion, Breite usw. zu verstehen.

Der Transistor 5 ist unter dem durchsichtigen Stirn-Panel der elektrischen Einrichtung angeordnet. Durch Ansteuerung der Steuerung wird die eigentliche Steuerung der Vorrichtung durchgeführt, indem die übertragbare Tastatur 1 an die markierte Stelle am Deckel gelenkt wird. Dies hat den Vorteil, daß bei der Vorrichtung keine mechanischen Steuerungselemente erforderlich sind. Auf diese Weise wird bei derart gesteuerten elektrischen Geräten der Zugriff für unbefugte Personen verhindert.

Die erfindungsgemäße Schaltung kann zur Steuerung oder Betätigung von Sicherheitseinrichtungen und zur kodierten Steuerung von Geräten dienen.

Es ist so Unbefugten verwehrt, in die Steuerung dieser Geräte, beispielsweise von Türschlössern, Kraftfahrzeugen, elektrischen Haushaltsgeräten oder Fertigungsanlagen, einzugreifen. Nur derjenige, der die tragbare Tastatur in die Nähe der dem Gerät zugeordneten Empfangsschaltung bringt, kann die Steuerung des Gerätes veranlassen. Dabei kann dem Benutzer ein Geheimcode zugeordnet sein, nach dessen Eingabe mit der Tastatur die Steuerung des Geräts erst freigegeben wird.

## Patentansprüche

1. Vorrichtung zur kontaklosen Übertragung von DTMF-Signalen mit einer Standardtastatur (1) zur Wahl von DTMF sowie mit einem eingebauten und vorzugsweise dynamischen Lautsprecher (2), wobei im Empfangsschaltkreis der Vorrichtung ein Dekoder (7) von DTMF-Signalen liegt und am Eingang des Empfangsschaltkreises ein Kondensator (6) und ein Widerstand (8) angeschlossen sind,
dadurch gekennzeichnet,
daß am Eingang des Empfangsschaltkreises der DTMF-Wahl ein auf Infrarotstrahlen ansprechender Transistor (5) angeschlossen ist, der mit seinem einen Ende mit der gemeinsamen Erde (4) der Empfangsschaltung verbunden ist, während sein anderes Ende mit dem Eingang der Empfangsschaltung und mit einem Widerstand (10) verbunden ist, dessen zweites Ende an die Versorgungsspannung (9) angeschlossen ist, wobei die tragbare Standardtastatur (1) der DTMF-Wahl über eine Infrarotstrahlen aussendende Diode (3) in Serie mit dem Schaltkreis des eingebauten dynamischen Lautsprechers (2) geschaltet ist.
